# EUROPEAN PATENT SPECIFICATION

(11) **EP 2 887 499 B1**
(45) Date of publication and mention of the grant of the patent: **28.06.2017**
(21) Application number: 13198020.3
(22) Date of filing: 18.12.2013
(51) Int. Cl.: H02K 1/04, H02K 1/12, H02K 1/20, H02K 7/18, H02K 5/128, H02K 9/00

(54) **Stator insulation for cold magnets**
Statorisolierung für kalte Magneten
Isolation de stator à aimants à froid

(43) Date of publication of application: 24.06.2015
(73) Proprietor: Siemens Aktiengesellschaft, 80333 München (DE)
(72) Inventor: Airoldi, Giovanni, 7100 Vejle (DK)

(56) References cited:
- EP-A1- 2 067 960
- EP-A1- 2 645 534
- WO-A1-2010/092402
- FR-A5- 2 087 127
- US-A- 4 933 581

## Description

### Field of invention

The present invention relates to a generator for a wind turbine, in particular a direct drive wind turbine, to a wind turbine and to a method for manufacturing a generator for a wind turbine.

### Art Background

Generators of wind turbines convert mechanical energy into electrical energy by using a magnetic field linkage. A generator comprises a stator assembly and a rotor assembly. The stator assembly represents the stationary parts of the generator. The rotor assembly represents the moving parts of the generator. The above mentioned magnetic field linkage couples the stator assembly with the rotor assembly.

In recent years, especially since the introduction of rare-earth magnetic materials, permanent magnet (PM) electromechanical generators have become popular since they eliminate the need for commutators and brushes, which are commonly used with conventional Direct Current electromechanical generator. The absence of an external electrical rotor excitation eliminates losses on the rotor and makes PM electromechanical generators more efficient.

Permanent magnet generators are also known for their durability, controllability, and absence of electrical sparking. Thanks to their advantages PM electromechanical generators are widely used for instance in wind turbines. PM electromechanical generators are used in particular in so called Direct Drive (DD) wind turbines, wherein the generator is directly connected via a main shaft to (a hub of) a rotor of the respective DD wind turbine.

One known technical problem of permanent magnet electromechanical generators is thermal load acting on the respective permanent magnet material. Specifically, waste heat being generated by stator coils of a stator of a permanent magnet electromechanical generator and by the stator iron core can cause the permanent magnet material to be heated up such that there is a serious risk of a demagnetization of the PM material. Such a demagnetization would dramatically decrease the performance of the respective electromechanical generator.

It is known to use an air gap between the stator assembly and the rotor assembly of an electromechanical generator as a cooling duct, through which a cooling fluid (such as air) is guided in order to remove the waste heat generated by the stator coils. The cooling fluid can be driven along the air gap by means of a natural convection through the permanent magnet electromechanical generator.

A generator for a wind turbine comprising the features of the preambles of claims 1 and 10 is described in EP 2 645 534 A1.

### Summary of the Invention

It may be an object to increase a thermal protection of permanent magnets of a generator of a wind turbine.

This object is solved by a generator for a wind turbine, in particular a direct drive wind turbine, by a wind turbine and by a method for manufacturing a generator for a wind turbine according to the independent claims.

According to a first aspect of the present invention, a generator for a wind turbine, in particular a direct drive wind turbine, is presented. The generator comprises a rotor assembly which is rotatable around a rotary axis and a (stationary) stator assembly. The rotor assembly and the stator assembly are arranged with respect to each other such that a gap exists between the rotor assembly and the stator assembly, so that the rotor assembly is rotatable with respect to the stator assembly. The stator assembly has a surface facing the gap and the rotor assembly. The stator assembly comprises a thermal insulation layer applied onto the surface for reducing an exchange of thermal energy between the rotor assembly and the stator assembly.

According to a further aspect of the present invention, the wind turbine, in particular a direct drive wind turbine, is presented which comprises the above described generator.

According to a further aspect of the present invention, a method of manufacturing a generator for a wind turbine, in particular a direct drive wind turbine, is presented. According to the method a rotor assembly which is rotatable around a rotary axis and a stationary stator assembly are provided, wherein the rotor assembly and the stator assembly are arranged with respect to each other such that a gap exists between the rotor assembly and the stator assembly, so that the rotor assembly is rotatable with respect to the stator assembly. The stator assembly has a surface facing the gap and the rotor assembly. Furthermore, a thermal insulation layer is applied onto the surface for reducing an exchange of thermal energy between the rotor assembly and the stator assembly.

According to an exemplary embodiment, the stator assembly may comprise stator windings and the rotor assembly may comprise magnet elements, in particular permanent magnet elements. However, in an alternative embodiment, the stator assembly may comprise magnet elements, in particular permanent magnet elements, and the rotor assembly may comprise rotor windings.

Specifically, the stator assembly comprises a tubular part which surrounds a shaft of the generator. The rotor assembly comprises a rotatable part (e.g. a rotor disk) which is in magnetic interaction with the tubular part of the stator assembly.

The surface of the stator assembly is the surface which is in magnetic interaction with the respective part of the rotor assembly. Specifically, the magnetic interaction is generated between the surface of the stator assembly and the respective part of the rotor assembly.

According to a further exemplary embodiment, the rotor assembly is an external rotor assembly such that (e.g. at least the part of the rotor assembly which provides the magnetic field linkage of) the rotor assembly surrounds at least partially the surface of the stator assembly. Hence, the surface of the stator assembly forms a radially outer surface of the stator assembly.

The term "radially" and the radial direction, respectively, denotes a direction running to the rotary axis, wherein the radial direction crosses the rotary axis and is perpendicular to the rotary axis. The rotary axis is the rotary axis of a rotary shaft of the generator. A circumferential direction runs around the rotary axis and is perpendicular to the radio direction and the rotary axis.

Alternatively, according to a further exemplary embodiment, the rotor assembly is an internal rotor assembly such that the surface of the stator assembly surrounds the rotor assembly. Hence, the surface of the stator assembly forms a radially inner surface of the stator assembly.

The thermal insulation layer is capable of impeding at least partially a heat transfer from the rotor assembly to the stator assembly, and vice versa. Specifically, the thermal insulation layer may allow for impeding a thermal radiation e.g. by means of a reflection of the corresponding infrared radiation, and/or a thermal conduction between a medium surrounding the magnet assembly, e.g. a cooling fluid within the gap, and the magnet component.

In particular, the permanent magnets, e.g. installed at the rotor assembly, can be protected by the thermal insulation layer from heat being generated by stator coils of the stator assembly. Thereby, the heat transfer from the heat generating stator coils to the magnets of the rotor assembly can be based on thermal radiation and thermal conduction.

Hence, the thermal insulation layer at the surface of the stator assembly may provide the advantage that during an operation the magnets e.g. at the rotor assembly can be kept comparatively cool because the heat from the stator assembly is insulated by the thermal insulation layer. This has the advantageous effect that compared to known magnet assemblies a less temperature sustaining and also cheaper material can be used for the described magnet material. In case of a rare earth material being used for the permanent magnet material a material composition can be employed which comprises a smaller amount of rare earth material such as e.g. dysprosium.

Further, by keeping the temperature of the permanent magnet material comparatively cool even in extreme operational ranges, the risk of an unwanted demagnetization of the magnet component can be effectively reduced. Furthermore, also the overall magnetic performance of the magnet assembly and, as a consequence, also the performance of the whole electromechanical generator can be increased by keeping the temperature of the permanent magnet material comparatively cool.

By the approach of the present invention, the thermal insulation layer is arranged at the surface of the stator assembly. The surface of the stator assembly is generally a homogeneous and smooth surface in comparison to a surface of the rotor assembly. The surface of the rotor assembly comprises generally a plurality of recesses into which the permanent magnets are arranged. Furthermore, the permanent magnets protrude from the rotor surface into the gap such that an uneven surface of the rotor assembly is given. Hence, it is more complex and hence more expensive to apply the thermal insulation layer to a surface of the rotor assembly. Hence, by the present invention, the thermal insulation layer at the surface of the stator assembly provides reduced manufacturing costs and proper insulation characteristics.

Furthermore, by the approach of the present invention, the magnets at the rotor assembly do not need to be insulated, because the surface of the stator assembly is already covered by the above described thermal insulation layer. It is easier and more economical to isolate the stator assembly and the stator segments, respectively, rather than each individual magnet at the rotor assembly.

Moreover, in general, the magnets of the rotor assembly receive heat also by solar radiation through the rotor assembly outer surface. In case the magnet surface is isolated, the heat would mainly be released through the rotor outer surface itself by convection. Instead, with the solution according to the present invention, by an isolated stator surface and a non-isolated magnet surface and non-isolated rotor assembly surface (which faces the gap and the stator assembly), the magnets heated up by solar radiation would be cooled by the air circulated in a direct cooling system for the stator assembly, which means that the cooling air inside the gap between the stator assembly and the rotor assembly may cool the non-isolated magnets of the rotor assembly.

Furthermore, direct drive wind turbines use generators which comprise an internal stator assembly and an external rotor assembly. Hence, the surface of the stator assembly is in this case an outer surface. Such an outer surface has the positive effect that an application of the thermal insulation layer is easier and hence the manufacturing costs are reduced.

The thermal insulating layer comprises a thermal insulating material which provides an impediment of a thermal conductance into the gap between the rotor assembly and the stator assembly, such that the magnets of the rotor assembly are protected against heat from the stator assembly.

The thermal insulating layer may be made of a sandwich structure of at least one layer of a thermal insulating material and at least one layer of a thermal radiation reflecting material, for example. The thermal radiation reflecting material may be any material, which will at least to a significant extend of e.g. 80% reflect thermal radiation. In particular, the thermal radiation reflecting material should be capable to reflect infrared electromagnetic radiation.

The thermal insulating layer may be made of a porous material, such as an aerogel material. Thereby, a plurality of air pockets with entrapped air may cause on the one hand a small thermal conductance and on the other hand a small weight. For instance, a small weight has the advantage that the mass of a rotor of an electromechanical generator can be kept within acceptable limits.

The thermal insulating layer may comprise a material of at least one of the group consisting of polyurethane foam, phenol foam, aerogel, mineral wool, glass wool, silica lime sand brick and clay. All these material provide the advantage that they are cheap, they have good thermal insulation properties and they have a comparatively small weight.

According to a further exemplary embodiment of the present invention, the thermal insulation layer is glued to the surface of the stator assembly.

However, the mounting can be also realized by means of a mechanical fastening technique such as e.g. screwing, clamping, engaging, welding, encasing etc. An engaging may be realized e.g. by means of any three dimensional contours. Thereby, a first contour (e.g. the surface of an undercut) is formed at the surface of the stator assembly and the thermal insulation layer forms a complementary contour which fits into the first contour, and vice versa.

According to a further exemplary embodiment, the stator assembly comprises at least one cooling duct which comprises an opening at the surface of the stator assembly. The thermal insulation layer comprises at least one hole, in particular a punched hole, which is formed such that a cooling fluid (e.g. cooling air) is flowable between the cooling duct and the gap. Hence, the cooling air may flow from the gap into the cooling duct and hence out of the gap. Alternatively, the cooling air may flow out of the cooling duct into the gap. The holes of the thermal insulation layer may be adapted to the location of the opening of the cooling duct, such that the thermal insulation layer does not cover the cooling fluid opening.

According to a further exemplary embodiment, the stator assembly comprises a plurality of stator segments being arranged one after another along a circumferential direction with respect to the rotary axis.

Summarising, by the present invention, the thermal insulation layer is arranged at a surface of the generator assembly, such that the stator surface is isolated in order to prevent the magnets at the rotor assembly from receiving heat from the stator assembly.

The magnets at the rotor assembly, in particular of the direct drive generator, receives heat from two main heat sources. First of all, the magnets receive heat from the stator assembly by radiation and convection. In particular, almost 20% of the heat is released from the stator assembly into the gap between the rotor assembly at the stator assembly. Secondly, the cooling air which circulates inside the generator assembly to cool the stator assembly heats up the magnets of the rotor assembly too. The cooling air may have a temperature which is higher than the ambient temperature surrounding the rotor outer surface.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

### Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.
- Fig. 1: shows a schematic view of a section of the generator according to an exemplary embodiment of the present invention, and
- Fig. 2: shows a schematic view of a section of the thermal insulation layer according to an exemplary embodiment of the present invention.

### Detailed Description

The illustration in the drawings is in schematic form. It is noted that in different figures, similar or identical elements are provided with the same reference signs.

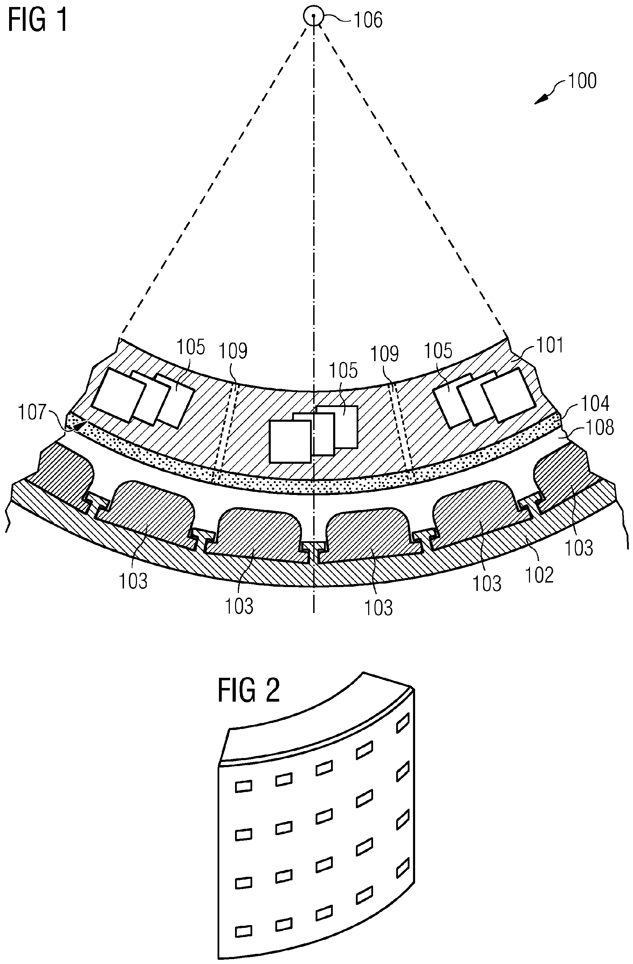

Fig. 1 shows a section of a generator 100 for a wind turbine, in particular a direct drive wind turbine. The generator 100 comprises a rotor assembly 102 which is rotatable around a rotary axis 106 and a stationary stator assembly 101, wherein the rotor assembly 102 and the stator assembly 101 are arranged with respect to each other such that a gap 108 exists between the rotor assembly 102 and the stator assembly 101, so that the rotor assembly 102 is rotatable with respect to the stator assembly 101. The stator assembly 101 has a surface 107 facing the gap 108 and the rotor assembly 102. The stator assembly 101 comprises a thermal insulation layer 104 applied onto the surface 107 for reducing an exchange of thermal energy between the rotor assembly 102 and the stator assembly 101.

The stator assembly 101 comprises stator windings 105 and the rotor assembly 102 comprises magnets 103, in particular permanent magnet elements.

The surface 107 of the stator assembly 101 is the surface which is in magnetic interaction with the respective part of the rotor assembly 102. Specifically, the magnetic interaction is generated between the surface 107 of the stator assembly and the respective part of the rotor assembly 102.

According to the exemplary embodiment shown in Fig. 1, the rotor assembly 102 is an external rotor assembly such that (e.g. at least the part of the rotor assembly 102 which provides the magnetic field linkage of) the rotor assembly 102 surrounds at least partially the surface 107 of the stator assembly 101. Hence, the surface 107 of the stator assembly 101 forms a radially outer surface of the stator assembly 101.

The thermal insulation layer 104 is capable of impeding at least partially a heat transfer from the rotor assembly 102 to the stator assembly 101, and vice versa.

In particular, the permanent magnets 103 installed at the rotor assembly 102 can be protected by the thermal insulation layer 104 from heat being generated by stator windings 105 of the stator assembly 101 and by stator iron core. Thereby, the heat transfer from the heat generating stator coils/windings 105 to the magnets 103 of the rotor assembly 102 can be based on thermal radiation and thermal convection.

Hence, the thermal insulation layer 104 at the surface 107 of the stator assembly 101 has the advantage that during an operation the magnets 103 can be kept comparatively cool because the heat from the stator assembly 101 is insulated by the thermal insulation layer 104.

By keeping the temperature of the permanent magnet material of the magnets 103 comparatively cool even in extreme operational ranges, the risk of an unwanted demagnetization of the magnet component can be effectively reduced. Furthermore, also the overall magnetic performance of the magnets 103 and, as a consequence, also the performance of the whole electromechanical generator 100 can be increased by keeping the temperature of the permanent magnet material comparatively cool.

By the approach of the present invention, the thermal insulation layer 104 is arranged at the surface 107 of the stator assembly 101. The surface 107 of the stator assembly 101 is generally a homogeneous and smooth surface in comparison to a surface of the rotor assembly 102. The surface of the rotor assembly 102 comprises generally a plurality of recesses into which the permanent magnets 103 are arranged. Furthermore, the permanent magnets 103 protrude from the rotor surface into the gap 108 such that an uneven surface of the rotor assembly 102 is given. Hence, it is more complex and hence more expensive to apply the thermal insulation layer 104 to a surface of the rotor assembly 102. The thermal insulation layer 104 is e.g. glued to the surface 107 of the stator assembly 101.

The stator assembly 101 comprises at least one cooling duct 109 which comprises an opening at the surface 107 of the stator assembly 101. The thermal insulation layer 104 comprises respective holes (see Fig, 2), in particular a punched holes, which are formed such that a cooling fluid (e.g. cooling air) can flow between the cooling duct 109 and the gap 108.

The stator assembly 101 comprises a plurality of stator segments as shown in Fig. 1 being arranged one after another along a circumferential direction with respect to the rotary axis 106.

Fig. 2 shows a more detailed view of a section of the thermal insulation layer 104. The thermal insulation layer 104 comprises at least one hole, in particular a punched hole, which is formed such that a cooling fluid (e.g. cooling air) can flow between the cooling duct 109 and the gap 108. Hence, the cooling air may flow from the gap 108 into the cooling duct 109 and hence out of the gap 108. Alternatively, the cooling air may flow out of the cooling duct 109 into the gap 108. The thermal insulation layer 104 may be adapted to the location of the opening of the cooling duct 109 at the surface 107, such that the thermal insulation layer 104 does not cover the cooling fluid opening of the cooling duct 109.

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

## Claims

1. Generator (100) for a wind turbine, in particular a direct drive wind turbine, the generator (100) comprising
a rotor assembly (102) which is rotatable around a rotary axis (106), and
a stator assembly (101),
wherein the rotor assembly (102) and the stator assembly (101) are arranged with respect to each other such that a gap (108) exists between the rotor assembly (102) and the stator assembly (101), so that the rotor assembly (102) is rotatable with respect to the stator assembly (101),
wherein the stator assembly (101) has a surface (107) facing the gap (108) and the rotor assembly (102), **characterized in that** the stator assembly (101) comprises a thermal insulation layer (104) applied onto the surface (107) for reducing an exchange of thermal energy between the rotor assembly (102) and the stator assembly (101).

2. Generator (100) according to claim 1,
wherein the insulation layer comprises an aerogel material.

3. Generator (100) according to claim 1 or 2,
wherein the thermal insulation layer (104) is glued to the surface (107) of the stator assembly (101).

4. Generator (100) according to one of the claims 1 to 3,
wherein the stator assembly (101) comprises at least one cooling duct (109) which comprises an opening at the surface (107),
wherein the thermal insulation layer (104) comprises at least one hole, in particular a punched hole, which is formed such that a cooling fluid is flowable between the cooling duct and the gap (108).

5. Generator (100) according to one of the claims 1 to 4,
wherein the stator assembly (101) comprises a plurality of stator segments being arranged one after another along a circumferential direction with respect to the rotary axis (106).

6. Generator (100) according to one of the claims 1 to 5,
wherein the rotor assembly (102) is an external rotor assembly such that the rotor assembly (102) surrounds the surface (107) of the stator assembly (101).

7. Generator (100) according to one of the claims 1 to 5,
wherein the rotor assembly (102) is an internal rotor assembly such that the surface (107) of the stator assembly (101) surrounds the rotor assembly (102).

8. Generator (100) according to one of the claims 1 to 7,
wherein the stator assembly (101) comprises stator windings (105), and
wherein the rotor assembly (102) comprises magnets (103), in particular permanent magnets.

9. Wind turbine, in particular a direct drive wind turbine, the wind turbine comprising,
a generator (100) according to one of the claims 1 to 8.

10. Method of manufacturing a generator (100) for a wind turbine, in particular a direct drive wind turbine, the method comprising
providing a rotor assembly (102) which is rotatable around a rotary axis (106), and
providing a stationary stator assembly (101),
wherein the rotor assembly (102) and the stator assembly (101) are arranged with respect to each other such that a gap (108) exists between the rotor assembly (102) and the stator assembly (101), so that the rotor assembly (102) is rotatable with respect to the stator assembly (101),
wherein the stator assembly (101) has a surface (107) facing the gap (108) and the rotor assembly (102), **characterized by** applying a thermal insulation layer (104) onto the surface (107) for reducing an exchange of thermal energy between the rotor assembly (102) and the stator assembly (101).

## Patentansprüche

1. Generator (100) für eine Windkraftanlage, insbesondere eine Windkraftanlage mit Direktantrieb, wobei der Generator (100) Folgendes umfasst:
eine Rotoranordnung (102), welche drehbar um eine Drehachse (106) ist, und
eine Statoranordnung (101),
wobei die Rotoranordnung (102) und die Statoranordnung (101) derart zueinander angeordnet sind, dass ein Spalt (108) zwischen der Rotoranordnung (102) und der Statoranordnung (101) besteht, sodass die Rotoranordnung (102) drehbar in Bezug auf die Statoranordnung (101) ist,
wobei die Statoranordnung (101) eine dem Spalt (108) und der Rotoranordnung (102) zugewandte Oberfläche (107) aufweist, **dadurch gekennzeichnet, dass**
die Statoranordnung (101) eine auf die Oberfläche (107) aufgebrachte thermische Isolationsschicht (104) zur Reduzierung eines Austauschs von thermischer Energie zwischen der Rotoranordnung (102) und der Statoranordnung (101) umfasst.

2. Generator (100) nach Anspruch 1,
wobei die Isolationsschicht ein Aerogelmaterial umfasst.

3. Generator (100) nach Anspruch 1 oder 2,
wobei die thermische Isolationsschicht (104) auf der Oberfläche (107 der Statoranordnung (101) aufgeklebt ist.

4. Generator (100) nach einem der Ansprüche 1 bis 3,
wobei die Statoranordnung (101) mindestens einen Kühlkanal (109) umfasst, welcher eine Öffnung an der Oberfläche (107) aufweist,
wobei die thermische Isolationsschicht (104) mindestens ein Loch, insbesondere ein ausgestanztes Loch, aufweist, welches derart ausgebildet ist, dass eine Kühlflüssigkeit zwischen dem Kühlkanal und dem Spalt (108) fließen kann.

5. Generator (100) nach einem der Ansprüche 1 bis 4,
wobei die Statoranordnung (101) eine Mehrzahl von Statorsegmenten umfasst, welche entlang einer Umfangsrichtung in Bezug auf die Drehachse (106) nacheinander angeordnet sind.

6. Generator (100) nach einem der Ansprüche 1 bis 5,
wobei die Rotoranordnung (102) eine externe Rotoranordnung ist derart, dass die Rotoranordnung (102) die Oberfläche (107) der Statoranordnung (101) umschließt.

7. Generator (100) nach einem der Ansprüche 1 bis 5,
wobei die Rotoranordnung (102) eine interne Rotoranordnung ist derart, dass die Oberfläche (107) der Statoranordnung (101) die Rotoranordnung (102) umschließt.

8. Generator (100) nach einem der Ansprüche 1 bis 7,
wobei die Statoranordnung (101) Statorwicklungen (105) umfasst und
wobei die Rotoranordnung (102) Magnete (103), insbesondere Permanentmagnete, umfasst.

9. Windkraftanlage, insbesondere eine Windkraftanlage mit Direktantrieb, wobei die Windkraftanlage Folgendes umfasst: einen Generator (100) nach einem der Ansprüche 1 bis 8.

10. Verfahren zum Herstellen eines Generators (100) für eine Windkraftanlage, insbesondere eine Windkraftanlage mit Direktantrieb, wobei das Verfahren Folgendes umfasst:
Schaffung einer Rotoranordnung (102), welche drehbar um eine Drehachse (106) ist, und
Schaffung einer stationären Statoranordnung (101),
wobei die Rotoranordnung (102) und die Statoranordnung (101) derart zueinander angeordnet sind, dass ein Spalt (108) zwischen der Rotoranordnung (102) und der Statoranordnung (101) besteht, sodass die Rotoranordnung (102) drehbar in Bezug auf die Statoranordnung (101) ist,
wobei die Statoranordnung (101) eine dem Spalt (108) und der Rotoranordnung (102) zugewandte Oberfläche (107) aufweist, **gekennzeichnet durch**
das Aufbringen einer thermischen Isolationsschicht (104) auf die Oberfläche (107) zur Reduzierung eines Austauschs von thermischer Energie zwischen der Rotoranordnung (102) und der Statoranordnung (101).

## Revendications

1. Générateur (100) pour une éolienne, en particulier une éolienne à entraînement direct, le générateur (100) comprenant :
un ensemble (102) de rotor qui est rotatif autour d'un axe rotatif (106), et
un ensemble (101) de stator,
dans lequel l'ensemble (102) de rotor et l'ensemble (101) de stator sont agencés l'un par rapport à l'autre de telle manière qu'un espace (108) existe entre l'ensemble (102) de rotor et l'ensemble (101) de stator, de sorte que l'ensemble (102) de rotor est rotatif par rapport à l'ensemble (101) de stator,
dans lequel l'ensemble (101) de stator a une surface (107) faisant face à l'espace (108) et à l'ensemble (102) de rotor, **caractérisé en ce que** l'ensemble (101) de stator comprend une couche (104) d'isolation thermique appliquée sur la surface (107) pour réduire un échange d'énergie thermique entre l'ensemble (102) de rotor et l'ensemble (101) de stator.

2. Générateur (100) selon la revendication 1,
dans lequel la couche d'isolation comprend un matériau aérogel.

3. Générateur (100) selon la revendication 1 ou 2,
dans lequel la couche (104) d'isolation thermique est collée à la surface (107) de l'ensemble (101) de stator.

4. Générateur (100) selon l'une des revendications 1 à 3,
dans lequel l'ensemble (101) de stator comprend au moins une conduite (109) de refroidissement qui comprend une ouverture au niveau de la surface (107),
dans lequel la couche (104) d'isolation thermique comprend au moins un trou, en particulier un trou poinçonné, qui est formé de telle manière qu'un fluide de refroidissement peut s'écouler entre la conduite de refroidissement et l'espace (108).

5. Générateur (100) selon l'une des revendications 1 à 4,
dans lequel l'ensemble (101) de stator comprend une pluralité de segments de stator étant agencés l'un après l'autre le long d'un sens circonférentiel par rapport à l'axe rotatif (106).

6. Générateur (100) selon l'une des revendications 1 à 5,
dans lequel l'ensemble (102) de rotor est un ensemble de rotor externe de telle sorte que l'ensemble (102) de rotor entoure la surface (107) de l'ensemble (101) de stator.

7. Générateur (100) selon l'une des revendications 1 à 5,
dans lequel l'ensemble (102) de rotor est un ensemble de rotor interne de telle sorte que la surface (107) de l'ensemble (101) de stator entoure l'ensemble (102) de rotor.

8. Générateur (100) selon l'une des revendications 1 à 7,
dans lequel l'ensemble (101) de stator comprend des enroulements (105) de stator, et
dans lequel l'ensemble (102) de rotor comprend des aimants (103), en particulier des aimants permanents.

9. Éolienne, en particulier une éolienne à entraînement direct, l'éolienne comprenant,
un générateur (100) selon l'une des revendications 1 à 8.

10. Procédé de fabrication d'un générateur (100) pour une éolienne, en particulier une éolienne à entraînement direct, le procédé comprenant
la fourniture d'un ensemble (102) de rotor qui est rotatif autour d'un axe rotatif (106), et
la fourniture d'un ensemble (101) de stator,
dans lequel l'ensemble (102) de rotor et l'ensemble (101) de stator sont agencés l'un par rapport à l'autre de telle manière qu'un espace (108) existe entre l'ensemble (102) de rotor et l'ensemble (101) de stator, de sorte que l'ensemble (102) de rotor est rotatif par rapport à l'ensemble (101) de stator,
dans lequel l'ensemble (101) de stator a une surface (107) faisant face à l'espace (108) et à l'ensemble (102) de rotor, **caractérisé par**
l'application d'une couche (104) d'isolation thermique sur la surface (107) pour réduire un échange d'énergie thermique entre l'ensemble (102) de rotor et l'ensemble (101) de stator.
